# EUROPÄISCHE PATENTSCHRIFT

(11) **EP 1 068 712 B1**
(45) Veröffentlichungstag und Bekanntmachung des Hinweises auf die Patenterteilung: **09.04.2003**
(21) Anmeldenummer: 99939757.3
(22) Anmeldetag: 06.04.1999
(51) Int. Cl.: H04M 1/22, H04M 1/72

(54) **TELEKOMMUNIKATIONSENDGERÄT**
TELECOMMUNICATION TERMINAL
TERMINAL DE TELECOMMUNICATION

(30) Priorität: 03.04.1998 DE 19815014
(43) Veröffentlichungstag der Anmeldung: 17.01.2001
(73) Patentinhaber: ROBERT BOSCH GMBH, 70442 Stuttgart (DE)
(72) Erfinder: LIEBER, Markus, D-31134 Hildesheim (DE)
(86) Internationale Anmeldenummer: DE9901034
(87) Internationale Veröffentlichungsnummer: WO99052257

(56) Entgegenhaltungen:
- EP-A- 0 438 670
- US-A- 4 531 034
- US-A- 4 924 044
- US-A- 4 982 424
- US-A- 5 517 551
- US-A- 5 570 025

## Beschreibung

### Stand der Technik

Die Erfindung geht von einem Telekommunikationsendgerät nach der Gattung des Hauptanspruchs aus.

Aus dem Dokument US 5 570 025 ist ein Telekommunikationsendgerät bekannt, bei dem mindestens eine Taste aus lichtdurchlässigem Material vorgesehen ist und bei dem die Lichtquelle die Taste in Abhängigkeit des Betriebszustandes des Telekommunikationsendgerätes beleuchtet, wenn eine Betätigung der Taste eine diesem Betriebszustand zugeordnete Funktion auslöst. Auf diese Weise können einzelne Tasten getrennt verschiedene Zustände des Telekommunikationsendgerätes signalisieren. Da nur diejenigen Tasten beleuchtet werden, die eine dem jeweiligen Betriebszustand zugeordnete Funktion auslösen, wird dem Benutzer die Auswahl der in diesem Betriebszustand möglichen Bedienfunktionen mittels Tastenbetätigung erleichtert und dadurch die Übersichtlichkeit erhöht.

Das erfindungsgemäße Telekommunikationsendgerät mit den Merkmalen des Hauptanspruches hat demgegenüber den Vorteil, daß die Leiterplatte im Bereich der Taste eine Bohrung aufweist und daß die Lichtquelle auf der der Taste gegenüberliegenden Seite der Leiterplatte so angeordnet ist, daß ihr Licht durch die Bohrung die Taste beleuchtet. Auf diese Weise ist die Lichtquelle vor Beschädigung durch das Druckstück bei Betätigung der Taste geschützt und die Lichtzufuhr von der Lichtquelle zur Taste durch die Bohrung gewährleistet.

Durch die in den Unteransprüchen aufgeführten Maßnahmen sind vorteilhafte Weiterbildungen und Verbesserungen des im Hauptanspruch angegebenen Telekommunikationsendgerätes möglich.

Besonders vorteilhaft ist es, daß die Lichtquelle einen eingehenden Anruf optisch signalisiert, daß die Lichtquelle die Taste bei eingehendem Anruf beleuchtet und daß durch Betätigung der Taste eine Entgegennahme des eingehenden Anrufs erfolgt. Auf diese Weise weiß der Benutzer sofort, welche Taste bei einem ankommenden Anruf zu betätigen ist, da nur diese Taste beleuchtet wird. Der Benutzer muß daher die erforderliche Taste nicht erst suchen, so daß die Übersichtlichkeit für den Benutzer erhöht und Zeit bei der Entgegennahme des Anrufs eingespart wird.

Ein weiterer Vorteil besteht darin, daß die Taste auf einer zumindest im Bereich der Taste lichtdurchlässigen Schaltmatte aufliegt und daß die Taste ein lichtdurchlässiges Druckstück umfaßt, das der Kontaktgabe bei Betätigung der Taste dient. Auf diese Weise sind keine zusätzlichen Lichtleitkörper erforderlich, um die Taste mittels der Lichtquelle zu beleuchten, da die Schaltmatte und das Druckstück zusätzlich als Lichtleiter fungieren. Auf diese Weise können Material- und Herstellungskosten sowie der Platzaufwand für einen zusätzlichen Lichtleiter eingespart werden. Der geringere Platzbedarf ist besonders für als Mobiltelefon ausgebildete Telekommunikationsendgeräte von Vorteil, bei denen es besonders auf eine geringe Baugröße ankommt.

Ein weiterer Vorteil besteht darin, daß die Beleuchtung der Taste erlischt, wenn durch Betätigung der Taste eine Kontaktgabe erfolgt und wenn sich dadurch ein anderer Betriebszustand des Telekommunikationsendgerätes einstellt. Auf diese Weise besteht für den Benutzer eine optische Kontrollmöglichkeit über die erfolgreiche Betätigung der Taste.

Ein weiterer Vorteil besteht darin, daß die Beleuchtung der Taste bei Entgegennahme des eingehenden Anrufs durch Betätigung der Taste erlischt. Auf diese Weise besteht für den Benutzer eine optische Kontrollmöglichkeit für eine erfolgreiche Entgegennahme des eingehenden Anrufs durch Betätigung der Taste.

Ein weiterer Vorteil besteht darin, daß die Lichtquelle die Taste blinkend beleuchtet. Auf diese Weise ist eine wirkungsvollere optische Signalisierung möglich, da die Aufmerksamkeit des Benutzers stärker auf den aktuellen Betriebszustand des Telekommunikationsendgerätes, beispielsweise auf den Eingang eines Anrufs gelenkt wird. Dies ist vor allem dann von Bedeutung, wenn keine zusätzliche akustische Signalisierung vorliegt. Der Benutzer wird dennoch besonders schnell auf den aktuellen Betriebszustand des Telekommunikationsendgerätes durch die blinkende Beleuchtung aufmerksam gemacht.

### Zeichnung

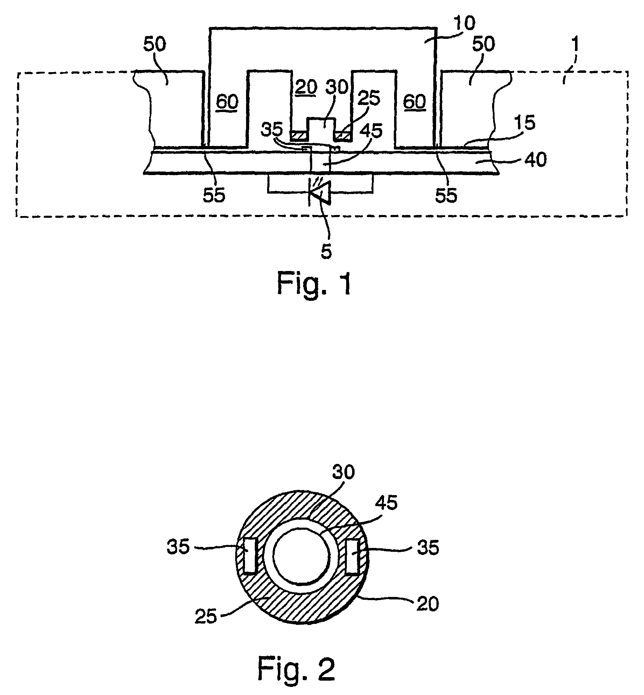

Ein Ausführungsbeispiel der Erfindung ist in der Zeichnung dargestellt und in der nachfolgenden Beschreibung näher erläutert. Es zeigen Figur 1 eine Seitenansicht eines erfindungsgemäßen Telekommunikationsendgerätes und Figur 2 eine Draufsicht auf einen Schaltdom zur Kontaktgabe oberhalb einer Bohrung für den Lichtaustritt einer Lichtquelle.

### Beschreibung des Ausführungsbeispiels

In Figur 1 kennzeichnet 1 ein Telekommunikationsendgerät, das beispielsweise als Mobiltelefon, als Schnurlostelefon, als Funkgerät oder dergleichen ausgebildet sein kann. Das Telekommunikationsendgerät 1 umfaßt ein Gehäuse 50 mit einer Einbuchtung 55, in der eine Taste 10 geführt ist. Die Taste 10 bildet dabei einen Hohlkörper, dessen Außenwände 60 einstückig mit einer Schaltmatte 15 verbunden sind, die im Innern des Gehäuses 50 gelagert ist. Die Taste 10 weist in ihrem Innern ein vorzugsweise zylinderförmiges Druckstück 20 auf, den sogenannten Schaltdom. Dieser ist an seiner der Leiterplatte 40 zugewandten Stirnseite mit einem Sackloch 30 versehen. Die Taste 10, die Schaltmatte 15 und der Schaltdom 20 sind aus einem elastischen, lichtdurchlässigen Material gebildet. Die Schaltmatte 15 kann optional auch nur im Bereich des Schaltdoms 20 aus einem lichtdurchlässigen Material gebildet sein. Der Schaltdom 20 weist an seiner Stirnseite ringförmig auf einem Außenrand des Sacklochs 30 ein elektrisch leitendes Material 25 auf, vorzugsweise Graphit. Dieses fungiert als elektrischer Kontakt. Die Schaltmatte 15 liegt auf einer Leiterplatte 40 auf. Die Leiterplatte 40 weist an ihrer der Taste 10 zugewandten Seite zwei metallische Gegenkontakte 35 auf, die so im Bereich des Kontaktes 25 angeordnet sind, daß sie bei entsprechendem Niederdrücken des Schaltdoms 20 durch den Kontakt 25 elektrisch leitend miteinander verbunden werden. Die zwei Gegenkontakte 35 sind dabei seitlich am Rand einer Bohrung 45 der Leiterplatte 40 angeordnet. Auf der dem Schaltdom 20 abgewandten Seite der Leiterplatte 40 ist eine als Leuchtdiode ausgebildete Lichtquelle 5 auf der Leiterplatte 40 beispielsweise als Surface Mounted Device (SMD) angeordnet, wobei sich die Leuchtdiode 5 direkt unterhalb der Bohrung 45 befindet, so daß der Schaltdom 20 durch die Leuchtdiode 5 über die Bohrung 45 beleuchtet werden kann.

Dabei ist gemäß Figur 2 der Durchmesser des Sacklochs 30 im Schaltdom 20 etwas größer als der Durchmesser der Bohrung 45 in der Leiterplatte 40. Der Lichtweg der Leuchtdiode 5 wird nicht durch den Schaltkontakt 25 auf dem Schaltdom 20 bzw. den seitlich angebrachten Gegenkontakten 35 auf der Leiterplatte 40 beeinträchtigt, da diese nicht im Lichtweg der Leuchtdiode 5 liegen. Das Licht der Leuchtdiode 5 tritt über die Bohrung 45 durch das Sackloch 30 in den Schaltdom 20 zur Beleuchtung der Taste 10 ein.

Die beschriebene Anordnung kann für weitere Tasten des Telekommunikationsendgerätes 1 vorgesehen sein, so daß in diesem Fall auch mehrere Tasten des Telekommunikationsendgerätes 1 durch jeweils eine Leuchtdiode 5 beleuchtet werden können.

Die Leuchtdiode 5 signalisiert dabei einen Betriebszustand des Telekommunikationsendgerätes 1 optisch. Die Leuchtdiode 5 beleuchtet die Taste 10 in Abhängigkeit des Betriebszustandes des Telekommunikationsendgerätes 1, wenn eine Betätigung der Taste 10 eine diesem Betriebszustand zugeordnete Funktion auslöst. Ist die Taste 10 beispielsweise die Ruftaste eines Mobiltelefons, so signalisiert die Leuchtdiode 5 einen eingehenden Anruf optisch und beleuchtet die Taste 10. Die Beleuchtung kann dabei auch blinkend ausgeführt sein, um die Aufmerksamkeit des Benutzers auf den eingehenden Anruf zu lenken. Dabei kann die optische Signalisierung eines eingehenden Rufes zusätzlich als Unterstützung zum Rufton oder ausschließlich zur Signalisierung eines ankommenden Rufes dienen. Wird nun die Taste 10 in Richtung der Leiterplatte 40 gedrückt, so drückt der Schaltdom 20 bis zur Kontaktierung des Kontaktes 25 mit den Gegenkontakten 35 ein. Durch die solchermaßen erfolgte Kontaktgabe erfolgt im Falle der Betätigung der Ruftaste eine Entgegennahme des eingehenden Anrufs. Dadurch wird der Betriebszustand des Telekommunikationsendgerätes 1 geändert. Das Telekommunikationsendgerät 1 befindet sich nun im Gesprächszustand beziehungsweise in einem Zustand einer aufgebauten Telekommunikationsverbindung. In diesem Fall erlischt die Beleuchtung der Taste 10 durch die Leuchtdiode 5, da im Gesprächszustand eine Betätigung der Ruftaste nicht erforderlich ist und somit dem Benutzer auch nicht durch Beleuchtung angeboten wird. Beim Loslassen der Taste 10 federt diese aufgrund ihrer Elastizität in eine Ausgangslage zurück. Der Schaltdom 20 federt dabei elastisch zurück und die Kontaktgabe zwischen dem Kontakt 25 und den Gegenkontakten 35 wird wieder unterbrochen.

Die Erfindung ist nicht auf als Fernsprechappparate ausgebildete Telekommunikationsendgeräte beschränkt, sondern für beliebige Telekommunikationsendgeräte, also auch beispielsweise für Faxgeräte, Pager usw. anwendbar.

Je nach Betriebszustand des Telekommunikationsendgerätes 1 können auch mehr als eine Taste 10 beleuchtet sein, wenn diese Tasten eine diesem Betriebszustand zugeordnete Funktion auslösen.

## Patentansprüche

1. Telekommunikationsendgerät (1), insbesondere Mobiltelefon, mit mindestens einer Taste (10) und mit mindestens einer Lichtquelle (5), wobei die mindestens eine Taste (10) aus lichtdurchlässigem Material vorgesehen ist, **dadurch gekennzeichnet, dass** eine Leiterplatte (40) mindestens eine Bohrung (45) aufweist, dass die Lichtquelle (5) mit der Leiterplatte (40) auf einer ersten Seite der Leiterplatte (40) elektrisch leitend verbunden ist und dass die Taste (10) auf der der ersten Seite gegenüberliegenden Seite der Leiterplatte (40) so angeordnet ist, dass die Lichtquelle (5) die Taste (10) durch die Bohrung (45) beleuchtet.

2. Telekommunikationsendgerät (1) nach Anspruch 1, **dadurch gekennzeichnet, dass** die Taste (10) ein lichtdurchlässiges Druckstück (20) umfasst und dass das Druckstück (20) bei Betätigung der Taste (10) mindestens einen Kontakt (25) des Druckstücks (20) auf mindestens einen Gegenkontakt (35) der Leiterplatte (40) drückt, wodurch eine Kontaktgabe erfolgt.

3. Telekommunikationsendgerät (1) nach Anspruch 1 oder 2, **dadurch gekennzeichnet, daß** die Lichtquelle (5) einen Betriebszustand des Telekommunikationsendgerätes (1) optisch signalisiert, wobei die Lichtquelle (5) die Taste (10) in Abhängigkeit des Betriebszustands des Telekommunikationsendgerätes (1) beleuchtet, wenn durch eine Betätigung der Taste (10) eine diesem Betriebszustand zugeordnete Funktion auslösbar ist.

4. Telekommunikationsendgerät (1) nach einem der vorhergehenden Ansprüche, **dadurch gekennzeichnet, dass** die Lichtquelle (5) einen eingehenden Anruf optisch signalisiert, dass die Lichtquelle (5) die Taste (10) bei eingehendem Anruf beleuchtet und dass durch Betätigung der Taste (10) eine Entgegennahme des eingehenden Anrufs erfolgt.

5. Telekommunikationsendgerät (1) nach einem der vorhergehenden Ansprüche, **dadurch gekennzeichnet, dass** die Lichtquelle (5) als Leuchtdiode ausgebildet ist.

6. Telekommunikationsendgerät (1) nach einem der vorhergehenden Ansprüche, **dadurch gekennzeichnet, dass** die Lichtquelle (5) die Taste (10) blinkend beleuchtet.

## Claims

1. Telecommunication terminal (1), particularly a mobile telephone, having at least one key (10) and having at least one light source (5), where the at least one key (10) is made of translucent material, **characterized in that** a printed circuit board (40) has at least one hole (45), **in that** the light source (5) is electrically conductively connected to the printed circuit board (40) on a first side of the printed circuit board (40), and **in that** the key (10) is arranged on that side of the printed circuit board (40) which is opposite the first side such that the light source (5) illuminates the key (10) through the hole (45).

2. Telecommunication terminal (1) according to Claim 1, **characterized in that** the key (10) comprises a translucent contact piece (20), and **in that**, when the key (10) is operated, the contact piece (20) presses at least one contact (25) on the contact piece (20) onto at least one mating contact (35) on the printed circuit board (40), which results in contact being made.

3. Telecommunication terminal (1) according to Claim 1 or 2, **characterized in that** the light source (5) visually signals an operating state of the telecommunication terminal (1), with the light source (5) illuminating the key (10) on the basis of the operating state of the telecommunication terminal (1) if operating the key (10) is able to trigger a function associated with this operating state.

4. Telecommunication terminal (1) according to one of the preceding claims, **characterized in that** the light source (5) visually signals an incoming call, **in that** the light source (5) illuminates the key (10) when there is an incoming call, and **in that** operating the key (10) accepts the incoming call.

5. Telecommunication terminal (1) according to one of the preceding claims, **characterized in that** the light source (5) is in the form of a light-emitting diode.

6. Telecommunication terminal (1) according to one of the preceding claims, **characterized in that** the light source (5) illuminates the key (10) such that it flashes.

## Revendications

1. Terminal de télécommunication (1) notamment téléphone mobile ayant au moins une touche (10) et au moins une source lumineuse (5), cette touche (10) étant en une matière transparente,
**caractérisé en ce qu'**
une plaque de circuit (40) comporte au moins un perçage (45) et la source lumineuse (5) est reliée électriquement à la plaque de circuit (40) sur un premier côté de la plaque de circuit (40), la touche (10) étant installée sur le côté de la plaque de circuit (40) opposée au premier côté et la source lumineuse (5) éclaire la touche (10) à travers le perçage (45).

2. Terminal de télécommunication (1) selon la revendication 1,
**caractérisé en ce que**
la touche (10) comporte un poussoir (20) transparent et ce poussoir (20) lorsqu'on actionne la touche (10) établit au moins un contact (25) entre le poussoir (20) et au moins un contre-contact (35) de la plaque de circuit (40) pour réaliser le contact électrique.

3. Terminal de télécommunication (1) selon l'une quelconque des revendications 1 ou 2,
**caractérisé en ce que**
la source lumineuse (5) signale optiquement un état de fonctionnement du terminal de télécommunication (1),
la source lumineuse (5) éclairant la touche (10)en fonction de l'état de fonctionnement du terminal de télécommunication (1) si un actionnement de la touche (10) déclenche une fonction associée à cet état de fonctionnement.

4. Terminal de télécommunication (1) selon l'une quelconque des revendications précédentes,
**caractérisé en ce que** la source lumineuse (5) signale optiquement un appel entrant, la source lumineuse (5) éclairant la touche (10) pour un appel entrant et l'actionnement de la touche (10) commande la prise de l'appel entrant.

5. Terminal de télécommunication (1) selon l'une quelconque des revendications précédentes,
**caractérisé en ce que**
la source lumineuse (5) est une diode électroluminescente.

6. Terminal de télécommunication (1) selon l'une quelconque des revendications précédentes,
**caractérisé en ce que**
la source lumineuse (5) éclaire la touche (10) de façon clignotante.
